(19) Europäisches Patentamt
European Patent Office
Office européen des brevets

(11) **EP 4 123 273 B1**

(12) **EUROPEAN PATENT SPECIFICATION**

(45) Date of publication and mention
of the grant of the patent:
**01.04.2026 Bulletin 2026/14**

(21) Application number: **21808410.1**

(22) Date of filing: **07.04.2021**

(51) International Patent Classification (IPC):
**B23K 26/03** *(2006.01)*   **B23K 26/21** *(2014.01)*
**B23K 26/38** *(2014.01)*   **G01J 5/00** *(2022.01)*
**G01J 5/60** *(2006.01)*   **G01J 5/0806** *(2022.01)*
**G01J 5/0802** *(2022.01)*   **G01J 5/06** *(2022.01)*

(52) Cooperative Patent Classification (CPC):
**B23K 26/034; B23K 26/21; B23K 26/38;**
**G01J 5/00; G01J 5/064; G01J 5/0802;**
**G01J 5/0806; G01J 5/602;** G01J 2005/607

(86) International application number:
**PCT/JP2021/014810**

(87) International publication number:
**WO 2021/235127 (25.11.2021 Gazette 2021/47)**

(54) **THERMAL RADIATION LIGHT DETECTION DEVICE AND LASER PROCESSING DEVICE**

VORRICHTUNG ZUR DETEKTION VON WÄRMESTRAHLUNGSLICHT UND
LASERBEARBEITUNGSVORRICHTUNG

DISPOSITIF DE DÉTECTION DE LUMIÈRE PAR RAYONNEMENT THERMIQUE ET DISPOSITIF DE
TRAITEMENT LASER

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.05.2020 JP 2020087973**

(43) Date of publication of application:
**25.01.2023 Bulletin 2023/04**

(73) Proprietor: **Hamamatsu Photonics K.K.**
**Hamamatsu-shi, Shizuoka 435-8558 (JP)**

(72) Inventors:
• **ITOH, Katsuhisa**
**Hamamatsu-shi, Shizuoka 435-8558 (JP)**
• **WATANABE, Masaki**
**Hamamatsu-shi, Shizuoka 435-8558 (JP)**
• **MATSUMOTO, Satoshi**
**Hamamatsu-shi, Shizuoka 435-8558 (JP)**
• **OHMIYA, Takenori**
**Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(56) References cited:
EP-A1- 2 706 330   JP-A- 2003 245 789
JP-A- 2003 245 789   JP-A- 2017 156 138
JP-A- 2018 126 781   JP-A- H04 198 821
JP-A- H11 281 482   JP-A- H11 337 415
JP-A- S61 210 922   US-A- 4 619 533
US-A- 4 708 493   US-A- 5 696 703

## Description

### Technical Field

The present disclosure relates to a thermal radiation light detection device and a laser processing device.

### Background Art

A laser processing device has been known that measures a temperature of a region on a workpiece irradiated with laser light by detecting thermal radiation light emitted from the region while processing the workpiece by irradiating the workpiece with the laser light (for example, refer to Patent Literature 1).

### Citation List

### Patent Literature

Patent Literature 1: Japanese Unexamined Patent Publication No. 2006-341563

US 5 696 703 A describes a method of monitoring the temperature of a target, the method comprising: a) sensing radiation emitted by the target at at least two different wavelengths; b) determining a temperature value from the sensed radiation in accordance with a first predetermined algorithm; c) repeating steps a) and b) a number of times to generate a set of temperature values; d) selecting a target temperature from the set of temperature values in accordance with a second predetermined algorithm; and, e) generating an output signal defining the target temperature obtained in step d).

EP 2 706 330 A1 describes a measuring device having a device housing and an infrared sensor arranged in the device housing for contactless temperature measurement. An additional ambient temperature sensor is provided for determining the ambient temperature of the measuring device. Another temperature sensor, formed as contact temperature sensor is arranged in the device housing of the measuring device and is mounted in the immediate vicinity of the infrared sensor.

JP 2003 245 789 A describes a laser machining head with a projection lens, a dichroic mirror and a condenser lens. The projection lens condenses laser beams from a laser diode. The dichroic mirror reflects the condensed laser beams, which irradiate the workpiece. The beam receiving lens receives radiant beams emitted from a machining section. The radiant beams are made incident on an optical fiber at a radiant light emitting port arranged at the optical axis and are transmitted to a radiation thermometer, enabling the temperature of the machining section to be measured. Even when the irradiation angle of the laser beam or the height of the machining section changes, the radiant beams are received along the optical axis all the time.

US 4 619 533 A describes a apparatus for measuring bath temperature of metallurgical furnaces through a tuyere. The apparatus comprises a periscope adapted to be inserted into a tuyere, a fiber optic cable having one end connected to the periscope for receiving radiation entering the tuyere from the bath of a furnace, and a two wavelength pyrometer connected to the other end of the fiber optic cable for analysing the radiations transmitted through the fiber optic cable to provide an indication of the temperature of the bath.

### Summary of Invention

### Technical Problem

In the above-described laser processing device, the accuracy of measurement of the temperature of the region on the workpiece irradiated with the laser light is reduced by the influence of environmental temperature, which is a concern. Particularly, when the temperature of the region on the workpiece irradiated with the laser light is low (for example, a temperature of 250°C or less), the influence of the environmental temperature becomes remarkable.

An object of the present disclosure is to provide a thermal radiation light detection device and a laser processing device that enable highly accurate temperature measurement.

**Solution to Problem**

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. A thermal radiation light detection device according to one aspect of an example includes: a housing including a plurality of wall portions; a light entrance unit attached to a wall portion among the plurality of wall portions and configured to cause thermal radiation light to enter the housing; a light extraction unit disposed inside housing and configured to extract light of a first wavelength and light of a second wavelength from the thermal radiation light, the second wavelength being different from the first wavelength; a first light detection unit attached to a wall portion among the plurality of wall portions and configured to detect the light of the first wavelength; a second light detection unit attached to a wall portion among the plurality of wall portions and configured to detect the light of the second wavelength; and a first temperature detection unit attached to a wall portion among the plurality of wall portions, the wall portion to which the first temperature detection unit is attached being different from the wall portion to which the first light detection unit is attached.

In the thermal radiation light detection device according to one aspect of the present disclosure, the light extraction unit extracts the light of the first wavelength and the light of the second wavelength from the thermal radiation light, the first light detection unit detects the light of the first wavelength, and the second light detection unit detects the light of the second wavelength. Accordingly, a temperature of a region that has emitted the thermal radiation light can be obtained based on a signal output from the first light detection unit and a signal output from the second light detection unit. Here, thermal radiation light emitted from the housing enters at least the first light detection unit, which is a concern. Particularly, thermal radiation light emitted from the wall portions different from the wall portion to which the first light detection unit is attached is likely to enter the first light detection unit. Therefore, in the thermal radiation light detection device according to one aspect of the present disclosure, the first temperature detection unit is attached to the wall portion different from the wall portion to which the first light detection unit is attached. Accordingly, at least the signal output from the first light detection unit can be corrected based on a signal output from the first temperature detection unit. As described above, the thermal radiation light detection device according to one aspect of the present disclosure enables highly accurate temperature measurement.

In the thermal radiation light detection device according to one aspect of the present disclosure, the first temperature detection unit may be attached to a wall portion among the plurality of wall portions, the wall portion to which the first temperature detection unit is attached facing the wall portion to which the first light detection unit is attached. Accordingly, the signal output from the first light detection unit can be corrected with higher accuracy, based on the signal output from the first temperature detection unit. The reason is that thermal radiation light emitted from the wall portion facing the wall portion to which the first light detection unit is attached is more likely to enter the first light detection unit.

In the thermal radiation light detection device according to one aspect of the present disclosure, the first light detection unit includes a first light detection element configured to detect the light of the first wavelength. At least one of the light extraction unit and the first light detection unit includes a first condenser lens configured to condense the light of the first wavelength on the first light detection element. The first temperature detection unit located within an FOV of the first condenser lens on the wall portion to which the first temperature detection unit is attached. Accordingly, the signal output from the first light detection unit can be corrected with higher accuracy, based on the signal output from the first temperature detection unit. The reason is that thermal radiation light emitted from a portion of the wall portion to which the first temperature detection unit is attached is more likely to enter the first light detection unit, the portion being within the FOV of the first condenser lens.

The thermal radiation light detection device according to one aspect of the present disclosure may further include a second temperature detection unit attached to a wall portion among the plurality of wall portions, the wall portion to which the second temperature detection unit is attached being different from the wall portion to which the second light detection unit is attached. Accordingly, the signal output from the first light detection unit can be corrected based on the signal output from the first temperature detection unit, and a signal output from the second light detection unit can be corrected based on a signal output from the second temperature detection unit.

In the thermal radiation light detection device according to one aspect of the present disclosure, the second temperature detection unit may be attached to a wall portion among the plurality of wall portions, the wall portion to which the second temperature detection unit is attached facing the wall portion to which the second light detection unit is attached. Accordingly, the signal output from the second light detection unit can be corrected with higher accuracy, based on the signal output from the second temperature detection unit. The reason is that thermal radiation light emitted from the wall portion facing the wall portion to which the second light detection unit is attached is more likely to enter the second light detection unit.

In the thermal radiation light detection device according to one aspect of the present disclosure, the second light detection unit may include a second light detection element configured to detect the light of the second wavelength. At least one of the light extraction unit and the second light detection unit may include a second condenser lens configured to condense the light of the second wavelength on the second light detection element. The second temperature detection unit may be located within an FOV of the second condenser lens on the wall portion to which the second temperature detection unit is attached. Accordingly, the signal output from the second light detection unit can be corrected with higher accuracy, based on the signal output from the second temperature detection unit. The reason is that thermal radiation light emitted from a portion of the wall portion to which the second temperature detection unit is attached is more likely to enter the second light detection unit, the portion being within the FOV of the second condenser lens.

In the thermal radiation light detection device according to one aspect of the present disclosure, the wall portion to which the first light detection unit is attached and the wall portion to which the second light detection unit is attached may be different wall portions, and the wall portion to which the first temperature detection unit is attached and the wall portion to which the second temperature detection unit is attached may be the same wall portion. Accordingly, the disposition of each configuration in the housing can be simplified.

In the thermal radiation light detection device according to one aspect of the present disclosure, the wall portion to which the first light detection unit is attached and the wall portion to which the second light detection unit is attached may be the same wall portion, and the first temperature detection unit may be attached to a wall portion among the plurality of wall portions, the wall portion to which the first temperature detection unit is attached facing the wall portion to which the first light detection unit and the second light detection unit are attached. Accordingly, the signal output from the first light detection unit and the signal output from the second light detection unit can be corrected with higher accuracy, based on the signal output from the first temperature detection unit.

In the thermal radiation light detection device according to one aspect of the present disclosure, the first light detection unit may include a first light detection element configured to detect the light of the first wavelength. The second light detection unit may include a second light detection element configured to detect the light of the second wavelength. At least one of the light extraction unit and the first light detection unit may include a first condenser lens configured to condense the light of the first wavelength on the first light detection element. At least one of the light extraction unit and the second light detection unit may include a second condenser lens configured to condense the light of the second wavelength on the second light detection element. The first temperature detection unit is located in a region where an FOV of the first condenser lens and an FOV of the second condenser lens overlap each other on the wall portion to which the first temperature detection unit is attached. Accordingly, the signal output from the first light detection unit and the signal output from the second light detection unit can be corrected with higher accuracy, based on the signal output from the first temperature detection unit.

The thermal radiation light detection device according to the invention further includes a signal processing unit configured to obtain a temperature of a region having emitted the thermal radiation light, based on a signal output from the first light detection unit and a signal output from the second light detection unit. The signal processing unit corrects at least the signal output from the first light detection unit, based on a signal output from the first temperature detection unit. Accordingly, the temperature of the region that has emitted the thermal radiation light can be obtained with high accuracy.

A laser processing device according to one aspect of the present disclosure includes: the thermal radiation light detection device; a laser light source configured to emit laser light; and a light guide unit configured to guide thermal radiation light emitted from a region on a workpiece irradiated with the laser light, to the thermal radiation light detection device.

The laser processing device according to one aspect of the present disclosure enables highly accurate temperature measurement in the region on the workpiece irradiated with the laser light.

Advantageous Effects of Invention

According to the present disclosure, it is possible to provide the thermal radiation light detection device and the laser processing device that enable highly accurate temperature measurement.

Brief Description of Drawings

FIG. 1 is a configuration view of a laser processing device according to one embodiment.

FIG. 2 is a cross-sectional view of a thermal radiation light detection device shown in FIG. 1.

FIG. 3 is a cross-sectional view of the thermal radiation light detection device taken along line III-III shown in FIG. 2.

FIG. 4 is a cross-sectional view of a thermal radiation light detection device according to a modification example.

Description of Embodiments

Hereinafter, an embodiment of the present disclosure will be described in detail with reference to the drawings. Incidentally, in the drawings, the same or equivalent portions are denoted by the same reference signs, and a duplicated description will be omitted.

[Configuration of laser processing device]

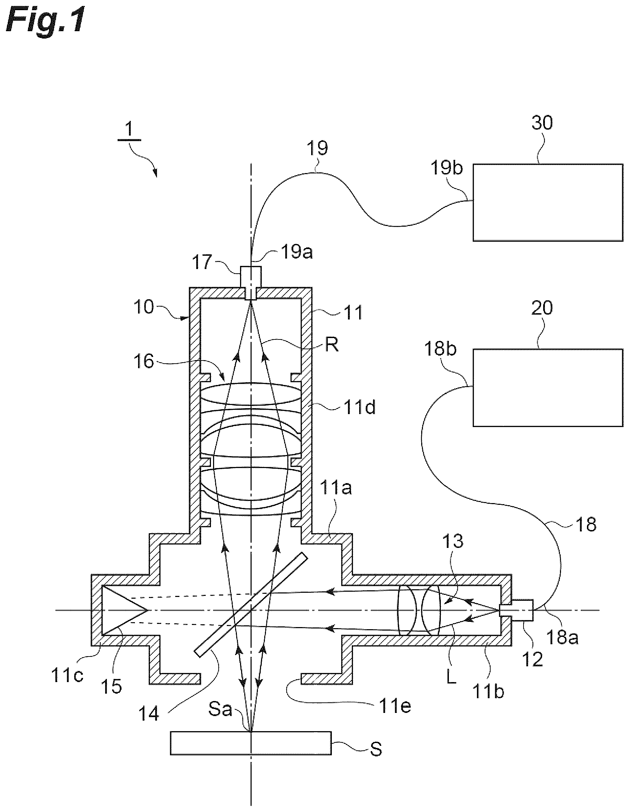

As shown in FIG. 1, a laser processing device 1 includes a laser processing head 10, a laser light source 20, and a thermal radiation light detection device 30. The laser processing device 1 measures a temperature of a region Sa on a workpiece S irradiated with laser light L (hereinafter, referred to as a "laser light irradiation region Sa") by detecting thermal radiation light R emitted from the laser light irradiation region Sa while processing the workpiece S by irradiating the workpiece S with the laser light L. One example of processing of the workpiece S using irradiation of the laser light L is cutting, welding, surface treatment, or the like. One example of the purpose of measuring the temperature of the laser light irradiation region Sa on the workpiece S is output control of the laser light, a detection of processing defects, or the like.

The laser processing head 10 includes a housing 11, a light entrance unit 12, a first optical system 13, a dichroic mirror 14, a beam trap 15, a second optical system 16, and a light emission unit 17. The laser processing head 10 is configured to be movable with respect to the workpiece S.

The housing 11 is formed of a central portion 11a, a pair of lateral extending portions 11b and 11c, and an upward extending portion 11d. The pair of lateral extending portions 11b and 11c extend opposite to each other from the central portion 11a along a horizontal direction. The upward extending portion extends upward from the central portion 11a along a vertical direction. An opening 11e is formed in a lower wall portion of the central portion 11a.

The light entrance unit 12 is attached to a tip portion of the lateral extending portion 11b. One end portion 18a of an optical fiber 18 is connected to the light entrance unit 12. The other end 18b of the optical fiber 18 is connected to the laser light source 20. The light entrance unit 12 causes the laser light L that is emitted from the laser light source 20 and is guided by the optical fiber 18, to enter the housing 11. As one example, the laser light source 20 is formed of a semiconductor laser and emits the laser light L having a center wavelength of 810 nm.

The first optical system 13 is disposed inside the lateral extending portion 11b. The first optical system 13 condenses the laser light L that has entered from a light entrance unit 12 side, on the workpiece S. As one example, the first optical system 13 is formed of two single lenses, and an anti-reflection film that prevents the reflection of the laser light L is formed on a surface of each of the single lenses.

The dichroic mirror 14 is disposed inside the central portion 11a. The dichroic mirror 14 reflects the laser light L condensed by the first optical system 13, to an opening 11e side. The laser light L reflected by the dichroic mirror 14 passes through the opening 11e, and the workpiece S is irradiated with the laser light L. The thermal radiation light R is emitted from the laser light irradiation region Sa on the workpiece S. The thermal radiation light R emitted from the laser light irradiation region Sa passes through the opening 11e to enter the dichroic mirror 14. The dichroic mirror 14 transmits the thermal radiation light R that has entered from the opening 11e side.

The beam trap 15 is disposed inside the lateral extending portion 11c. The beam trap 15 absorbs a slight quantity of the laser light L that has transmitted through the dichroic mirror 14. Accordingly, the diffused reflection of the laser light L inside the housing 11 is suppressed.

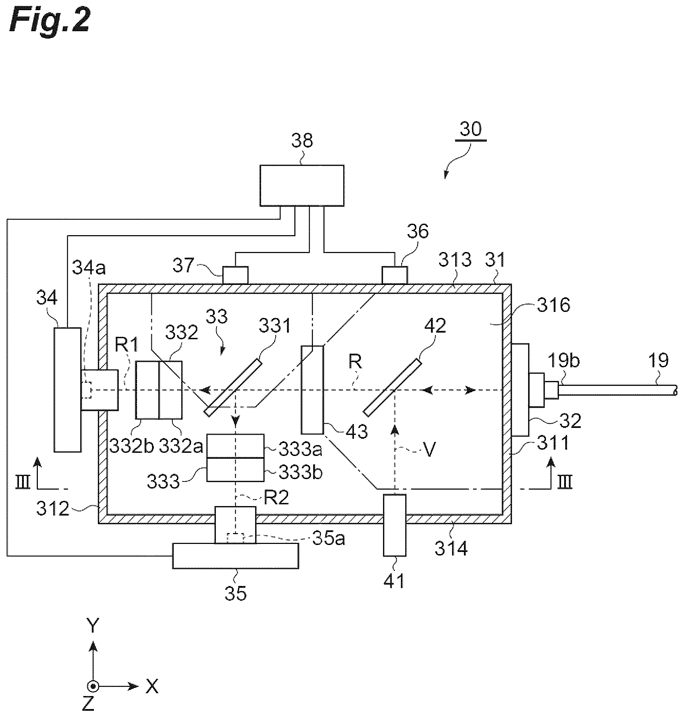

The second optical system 16 is disposed inside the upward extending portion 11d. The second optical system 16 condenses the thermal radiation light R that has entered from a dichroic mirror 14 side, on the light emission unit 17. As one example, the second optical system 16 is formed of two compound lenses. The compound lens disposed on the dichroic mirror 14 side is, for example, an achromatic collimator lens formed of two single lenses. The compound lens disposed on a light emission unit 17 side is, for example, an achromatic focus lens formed of three single lenses. In each of the compound lenses, chromatic aberration is corrected for light R1 of a first wavelength and light R2 of a second wavelength included in the thermal radiation light R (refer to FIG. 2).

The light emission unit 17 is attached to a tip portion of the upward extending portion 11d. One end portion 19a of an optical fiber 19 is connected to the light emission unit 17. The other end 19b of the optical fiber 19 is connected to the thermal radiation light detection device 30. The light emission unit 17 causes the thermal radiation light R condensed by the second optical system 16, to enter the optical fiber 19. The thermal radiation light R is guided to the thermal radiation light detection device 30 by the optical fiber 19. In the laser processing device 1, the laser processing head 10 and the optical fiber 19 function as a light guide unit that guides the thermal radiation light R emitted from the laser light irradiation region Sa, to the thermal radiation light detection device 30.

[Configuration of thermal radiation light detection device]

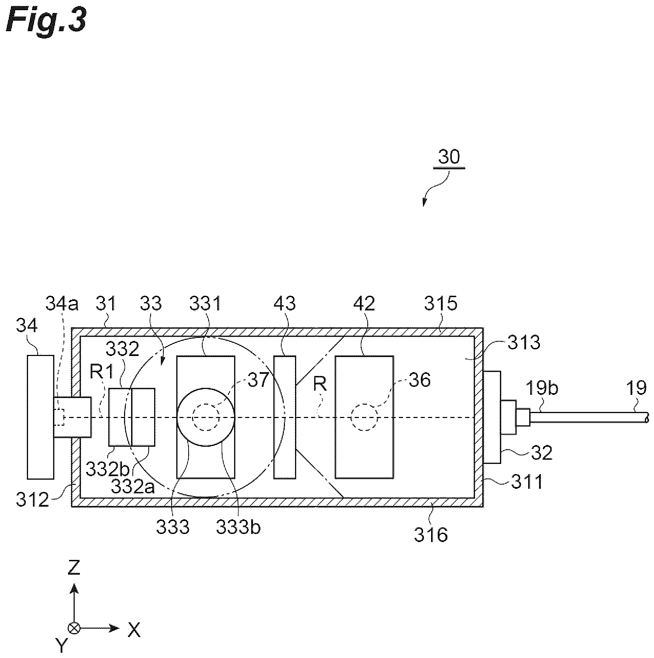

As shown in FIGS. 2 and 3, the thermal radiation light detection device 30 includes a housing 31, a light entrance unit 32, a light extraction unit 33, a first light detection unit 34, a second light detection unit 35, a first temperature detection unit 36, a second temperature detection unit 37, and a signal processing unit 38. Incidentally, in FIG. 3, the illustration of the signal processing unit 38 is omitted.

The housing 31 includes a plurality of wall portions 311, 312, 313, 314, 315 and 316. A pair of the wall portions 311 and 312 face each other in an X-axis direction. A pair of the wall portions 313 and 314 face each other in a Y-axis direction. A pair of the wall portions 315 and 316 face each other in a Z-axis direction. The wall portions 311, 312, 313, 314, 315 and 316 are flat wall portions that are partitioned off from each other by corners. However, as long as the wall portions 311, 312, 313, 314, 315 and 316 are wall portions that are partitioned off from each other by corners, the wall portions 311, 312, 313, 314, 315 and 316 are not limited to flat wall portions and may be curved wall portions. Incidentally, the corners that partition the wall portions 311, 312, 313, 314, 315 and 316 off from each other may be chamfered corners or nonchamfered corners.

The light entrance unit 32 is attached to the wall portion 311. The other end 19b of the optical fiber 19 is connected to the light entrance unit 32. The light entrance unit 32 causes the thermal radiation light R to enter the housing 31. The thermal radiation light R is light that is emitted from the laser light irradiation region Sa and is guided by the laser processing head 10 and the optical fiber 19 (refer to FIG. 1).

The light extraction unit 33 is disposed inside the housing 31. The light extraction unit 33 extracts the light R1 of the first wavelength and the light R2 of the second wavelength from the thermal radiation light R. The second wavelength is different from the first wavelength. In the present embodiment, the second wavelength is shorter than the first wavelength. As one example, the first wavelength is 2000 nm and the second wavelength is 1800 nm.

More specifically, the light extraction unit 33 is formed of a dichroic mirror 331, a first optical system 332, and a second optical system 333. The dichroic mirror 331 faces the light entrance unit 32 in the X-axis direction. The dichroic mirror 331 transmits light including the light R1 of the first wavelength of the thermal radiation light R that has entered from a light entrance unit 32 side, to a wall portion 312 side and reflects light including the light R2 of the second wavelength of the thermal radiation light R that has entered from the light entrance unit 32 side, to a wall portion 314 side.

The first optical system 332 is disposed between the dichroic mirror 331 and the wall portion 312. The first optical system 332 is formed of a first optical filter 332a and a first condenser lens 332b. The first optical filter 332a transmits the light R1 of the first wavelength of the light that has transmitted through the dichroic mirror 331, to a first condenser lens 332b side. The first condenser lens 332b condenses the light R1 of the first wavelength that has entered from a first optical filter 332a side, along the X-axis direction.

The second optical system 333 is disposed between the dichroic mirror 331 and the wall portion 314. The second optical system 333 is formed of a second optical filter 333a and a second condenser lens 333b. The second optical filter 333a transmits the light R2 of the second wavelength of the light reflected by the dichroic mirror 331, to a second condenser lens 333b side. The second condenser lens 333b condenses the light R2 of the second wavelength that has entered from a second optical filter 333a side, along the X-axis direction.

The first light detection unit 34 is attached to the wall portion 312. The first light detection unit 34 faces the first optical system 332 in the X-axis direction. The first light detection unit 34 includes a first light detection element 34a. The first light detection element 34a detects the light R1 of the first wavelength condensed by the first condenser lens 332b. The first light detection element 34a is, for example, a light-receiving element such as a photodiode disposed inside a CAN package.

The second light detection unit 35 is attached to the wall portion 314. The wall portion 312 to which the first light detection unit 34 is attached and the wall portion 314 to which the second light detection unit 35 is attached are different wall portions. The second light detection unit 35 faces the second optical system 333 in the Y-axis direction. The second light detection unit 35 includes a second light detection element 35a. The second light detection element 35a detects the light R2 of the second wavelength condensed by the second condenser lens 333b. The second light detection element 35a is, for example, a light-receiving element such as a photodiode disposed inside the CAN package.

The first temperature detection unit 36 is attached to the wall portion 313 different from the wall portion 312 to which the first light detection unit 34 is attached. The first temperature detection unit 36 is attached to the wall portion 313 intersecting the wall portion 312 to which the first light detection unit 34 is attached, and is located within a field of view (FOV) of the first condenser lens 332b on the wall portion 313. In FIGS. 2 and 3, the FOV of the first condenser lens 332b is shown by an alternate long and short dashed line. The first temperature detection unit 36 is, for example, a temperature detection element such as a thermistor having a small thermal time constant (for example, a thermal time constant of approximately 6 seconds). Incidentally, the FOV shown by the alternate long and short dashed line is not an FOV for the light R1 of the first wavelength, but an FOV for light of a wavelength that is thermal noise. The reason is that the first light detection unit 34 has sensitivity not only to the light R1 of the first wavelength but also to the light of the wavelength that is thermal noise and not only the light R1 of the first wavelength but also the light of the wavelength that is thermal noise enter the first light detection unit 34.

The second temperature detection unit 37 is attached to the wall portion 313 different from the wall portion 314 to which the second light detection unit 35 is attached. The wall portion 313 to which the first temperature detection unit 36 is attached and the wall portion 313 to which the second temperature detection unit 37 is attached are the same wall portion.

The second temperature detection unit 37 is attached to the wall portion 313 facing the wall portion 314 to which the second light detection unit 35 is attached, and is located within an FOV of the second condenser lens 333b on the wall portion 313. In FIGS. 2 and 3, the FOV of the second condenser lens 333b is shown by an alternate long and two short dashed line. The second temperature detection unit 37 is, for example, a temperature detection element such as a thermistor having a small thermal time constant (for example, a thermal time constant of approximately 6 seconds). Incidentally, the FOV shown by the alternate long and two short dashed line is not an FOV for the light R2 of the second wavelength, but an FOV for light of a wavelength that is thermal noise. The reason is that the second light detection unit 35 has sensitivity not only to the light R2 of the second wavelength but also to the light of the wavelength that is thermal noise and not only the light R2 of the second wavelength but also the light of the wavelength that is thermal noise enter the second light detection unit 35.

The signal processing unit 38 obtains a temperature of a region (namely, the laser light irradiation region Sa) that has emitted the thermal radiation light R, based on a signal output from the first light detection unit 34 and a signal output from the second light detection unit 35. At this time, the signal processing unit 38 corrects the signal output from the first light detection unit 34, based on a signal output from the first temperature detection unit 36 and corrects the signal output from the second light detection unit 35, based on a signal output from the second temperature detection unit 37. The signal processing unit 38 is formed of, for example, a signal processing substrate into which a microprocessor is assembled, or a signal processing substrate into which a central processing unit is assembled.

As one example, when a light quantity of the light R1 of the first wavelength emitted from the workpiece S is $Ms_1$, a light quantity of light of the first wavelength emitted from the housing 31 and the like is $I_1$, and a light quantity of light of the first wavelength detected by the first light detection unit 34 is $Mm_1$ the following equation (1) is established. When the first wavelength is $\lambda_1$ and a temperature detected by the first temperature detection unit 36 is $T_1$, the following equation (2) is established ($D_1$, $\beta_1$, and $C_1$ are constants in the following equation (2)). The light quantity $Ms_1$ of the light R1 of the first wavelength emitted from the workpiece S is calculated from the following equations (1) and (2). Accordingly, the influence of the light quantity $I_1$ of the light of the first wavelength emitted from the housing 31 and the like can be excluded. The above processing corresponds to correction processing for correcting the signal output from the first light detection unit 34, based on the signal output from the first temperature detection unit 36.

$$Ms_1 = Mm_1 - I_1 \ldots (1)$$

$$I_1 = D_1 + (\beta_1/\lambda_1^5)\cdot\exp[-C_1/\{\lambda_1(T_1 + 273.15)\}] \ldots (2)$$

Similarly, when a light quantity of the light R2 of the second wavelength emitted from the workpiece S is $Ms_2$, a light quantity of light of the second wavelength emitted from the housing 31 and the like is $I_2$, and a light quantity of light of the first wavelength detected by the second light detection unit 35 is $Mm_2$, the following equation (3) is established. When the second wavelength is $\lambda_2$ and a temperature detected by the second temperature detection unit 37 is $T_2$, the following equation (4) is established ($D_2$, $\beta_2$, and $C_2$ are constants in the following equation (4)). The light quantity $Ms_2$ of the light R2 of the second wavelength emitted from the workpiece S is calculated from the following equations (3) and (4). Accordingly, the influence of the light quantity $I_2$ of the light of the second wavelength emitted from the housing 31 and the like can be excluded. The above processing corresponds to correction processing for correcting the signal output from the second light detection unit 35, based on the signal output from the second temperature detection unit 37.

$$Ms_2 = Mm_2 - I_2 \ldots (3)$$

$$I_2 = D_2 + (\beta_2/\lambda_2^5)\cdot\exp[-C_2/\{\lambda_2(T_2 + 273.15)\}] \ldots (4)$$

The signal processing unit 38 obtains the temperature of the laser light irradiation region Sa from a ratio between the light quantity $Ms_1$ of the light R1 of the first wavelength emitted from the workpiece S and the light quantity $Ms_2$ of the light R2 of the second wavelength emitted from the workpiece S. This is the principle of a two-color radiation thermometer.

The thermal radiation light detection device 30 further includes a laser light source 41, a dichroic mirror 42, and an optical filter 43.

The laser light source 41 is attached to the wall portion 314. The laser light source 41 emits laser light V in a visible region into the housing 31 along the Y-axis direction.

The dichroic mirror 42 is disposed inside the housing 31 to face the light entrance unit 32 in the X-axis direction and to face the laser light source 41 in the Y-axis direction. The dichroic mirror 42 transmits the thermal radiation light R that has entered from the light entrance unit 32 side, to a dichroic mirror 331 side and reflects the laser light V that has entered from a laser light source 41 side, to the light entrance unit 32 side. The laser light V is guided by the optical fiber 19 and the laser processing head 10, and the workpiece S is irradiated with the laser light V. Since the laser light V is used as guide light, a position where the workpiece S is irradiated with the laser light L can be visually confirmed. In addition, since the laser light V is used as guide light, each configuration of the laser processing device 1 can be adjusted such that a processing position and a temperature measurement position on the workpiece S coincide with each other.

The optical filter 43 is disposed inside the housing 31 to be located between the dichroic mirror 42 and the dichroic mirror 331. The optical filter 43 transmits the thermal radiation light R that has entered from a dichroic mirror 42 side, to the dichroic mirror 331 side and removes scattered light and the like (scattered light and the like caused by the laser light L) that have entered from the dichroic mirror 42 side.

[Actions and effects]

In the thermal radiation light detection device 30, the light extraction unit 33 extracts the light R1 of the first wavelength and the light R2 of the second wavelength from the thermal radiation light R, the first light detection unit 34 detects the light R1 of the first wavelength, and the second light detection unit 35 detects the light R2 of the second wavelength. Accordingly, the temperature of the laser light irradiation region Sa can be obtained based on a signal output from the first light detection unit 34 and a signal output from the second light detection unit 35. Here, thermal radiation light emitted from the housing 31 enters each of the first light detection unit 34 and the second light detection unit 35, which is a concern. Particularly, thermal radiation light emitted from the wall portion 313 and the like different from the wall portion 312 to which the first light detection unit 34 is attached is likely to enter the first light detection unit 34. In addition, thermal radiation light emitted from the wall portion 313 and the like different from the wall portion 314 to which the second light detection unit 35 is attached is likely to enter the second light detection unit 35. Therefore, in the thermal radiation light detection device 30, the first temperature detection unit 36 is attached to the wall portion 313 different from the wall portion 312 to which the first light detection unit 34 is attached, and the second temperature detection unit 37 is attached to the wall portion 313 different from the wall portion 314 to which the second light detection unit 35 is attached. Accordingly, the signal output from the first light detection unit 34 can be corrected based on a signal output from the first temperature detection unit 36, and the signal output from the second light detection unit 35 can be corrected based on a signal output from the second temperature detection unit 37. As described above, the thermal radiation light detection device 30 and the laser processing device 1 enable highly accurate temperature measurement.

In addition, in order to correct the signal output from the first light detection unit 34 and the signal output from the second light detection unit 35, it is also conceivable that the thermal radiation light detection device 30 is provided with a mechanical mechanism such as a shutter. In that case, thermal radiation light emitted from the housing 31 and the like is detected by the first light detection unit 34 and the second light detection unit 35 in a state where the thermal radiation light R emitted from the workpiece S is prevented from entering the housing 31, and the signal output from the first light detection unit 34 and the signal output from the second light detection unit 35 are corrected by the signal. However, when the thermal radiation light detection device 30 is provided with the mechanical mechanism such as a shutter, a defect is likely to occur. On the other hand, in the thermal radiation light detection device 30 described above, since the mechanical mechanism such as a shutter is not required, a defect is unlikely to occur. Further, the thermal radiation light detection device 30 described above also enables high-speed repetitive measurements that cannot be followed by the mechanical mechanism such as a shutter.

In addition, in the thermal radiation light detection device 30, the first temperature detection unit 36 is located within the FOV of the first condenser lens 332b on the wall portion 313 to which the first temperature detection unit 36 is attached. Accordingly, the signal output from the first light detection unit 34 can be corrected with higher accuracy, based on the signal output from the first temperature detection unit 36. The reason is that thermal radiation light emitted from a portion of the wall portion 313 to which the first temperature detection unit 36 is attached is more likely to enter the first light detection unit 34, the portion being within the FOV of the first condenser lens 332b.

In addition, in the thermal radiation light detection device 30, the second temperature detection unit 37 is attached to the wall portion 313 facing the wall portion 314 to which the second light detection unit 35 is attached, and is located within the FOV of the second condenser lens 333b on the wall portion 313 to which the second temperature detection unit 37 is attached. Accordingly, the signal output from the second light detection unit 35 can be corrected with higher accuracy, based on the signal output from the second temperature detection unit 37. The reason is that thermal radiation light emitted from the wall portion 313 facing the wall portion 314 to which the second light detection unit 35 is attached is more likely to enter the second light detection unit 35. In addition, another reason is that thermal radiation light emitted from a portion of the wall portion 313 to which the second temperature detection unit 37 is attached is more likely to enter the second light detection unit 35, the portion being within the FOV of the second condenser lens 333b.

In addition, in the thermal radiation light detection device 30, the wall portion 312 to which the first light detection unit 34 is attached and the wall portion 314 to which the second light detection unit 35 is attached are different wall portions, and the wall portion 313 to which the first temperature detection unit 36 is attached and the wall portion 313 to which the second temperature detection unit 37 is attached are the same wall portion. Accordingly, the disposition of each configuration in the housing 31 can be simplified.

In addition, in the thermal radiation light detection device 30, the signal processing unit 38 obtains the temperature of the laser light irradiation region Sa based on the signal output from the first light detection unit 34 and the signal output from the second light detection unit 35. At this time, the signal processing unit 38 corrects the signal output from the first light detection unit 34, based on the signal output from the first temperature detection unit 36 and corrects the signal output from the second light detection unit 35, based on the signal output from the second temperature detection unit 37. Accordingly, the temperature of the laser light irradiation region Sa can be obtained with high accuracy.

[Modification examples]

In the embodiment, the light extraction unit 33 is formed of the dichroic mirror 331, the first optical system 332, and the second optical system 333, but the light extraction unit 33 may be formed of, for example, a half mirror, the first optical system 332, and the second optical system 333. The half mirror is a beam splitter that transmits some of the thermal radiation light R that has entered from the light entrance unit 32 side, to a first optical system 332 side and reflects the remainder of the thermal radiation light R to a second optical system 333 side. Namely, the light extraction unit 33 may be configured to extract the light R1 of the first wavelength and the light R2 of the second wavelength from the thermal radiation light R.

In addition, in the embodiment, the first condenser lens 332b that condenses the light R1 of the first wavelength on the first light detection element 34a is provided in the light extraction unit 33, but the first condenser lens that condenses the light R1 of the first wavelength on the first light detection element 34a may be provided in the first light detection unit 34, or the first condenser lenses may be provided in both the light extraction unit 33 and the first light detection unit 34.

In addition, in the embodiment, the second condenser lens 333b that condenses the light R2 of the second wavelength on the second light detection element 35a is provided in the light extraction unit 33, but the second condenser lens that condenses the light R2 of the second wavelength on the second light detection element 35a may be provided in the second light detection unit 35, or the second condenser lenses may be provided in both the light extraction unit 33 and the second light detection unit 35.

In addition, in the embodiment, the first temperature detection unit 36 is attached to the wall portion 312 intersecting the wall portion 313 to which the first light detection unit 34 is attached, but the first temperature detection unit 36 may be attached to any wall portion among the plurality of wall portions 311, 313, 314, 315, and 316 that is different from the wall portion 312 to which the first light detection unit 34 is attached. However, when the first temperature detection unit 36 is attached to the wall portion 311 facing the wall portion 312 to which the first light detection unit 34 is attached, a signal output from the first light detection unit 34 can be corrected with higher accuracy, based on a signal output from the first temperature detection unit 36. Further, when the first temperature detection unit 36 is located within the FOV of the first condenser lens (first condenser lens included in at least one of the light extraction unit 33 and the first light detection unit 34) on a wall portion to which the first temperature detection unit 36 is attached, the signal output from the first light detection unit 34 can be corrected with higher accuracy, based on the signal output from the first temperature detection unit 36.

In addition, in the embodiment, the second temperature detection unit 37 is attached to the wall portion 313 facing the wall portion 314 to which the second light detection unit 35 is attached, but the second temperature detection unit 37 may be attached to any wall portion among the plurality of wall portions 311, 312, 313, 315, and 316 that is different from the wall portion 314 to which the second light detection unit 35 is attached. However, when the second temperature detection unit 37 is attached to the wall portion 313 facing the wall portion 314 to which the second light detection unit 35 is attached, a signal output from the second light detection unit 35 can be corrected with higher accuracy, based on a signal output from the second temperature detection unit 37. Further, when the second temperature detection unit 37 is located within the FOV of the second condenser lens (second condenser lens included in at least one of the light extraction unit 33 and the second light detection unit 35) on a wall portion to which the second temperature detection unit 37 is attached, the signal output from the second light detection unit 35 can be corrected with higher accuracy, based on the signal output from the second temperature detection unit 37.

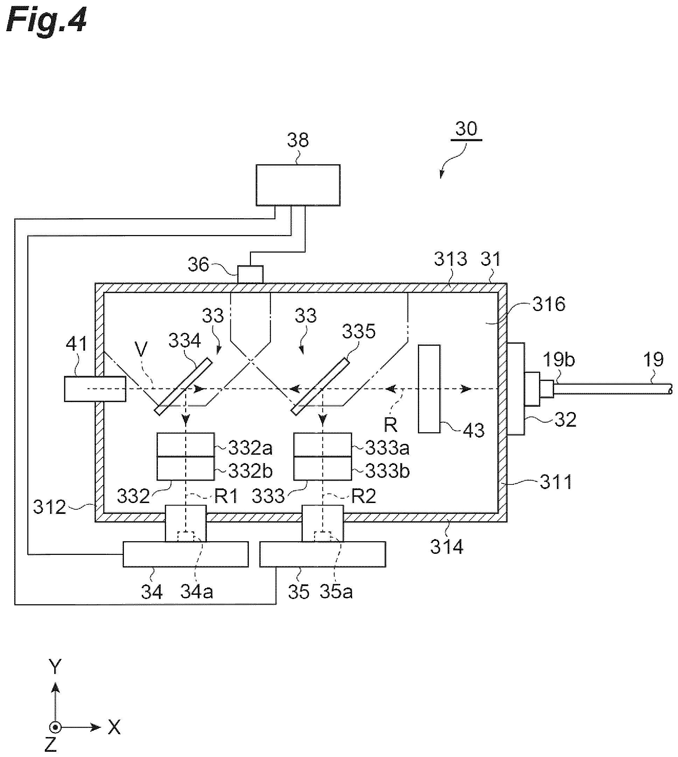

In addition, as shown in FIG. 4, a wall portion to which the first light detection unit 34 is attached and a wall portion to which the second light detection unit 35 is attached are the same wall portion. In that case, the first temperature detection unit 36 may be attached to a wall portion facing the wall portion to which the first light detection unit 34 and the second light detection unit 35 are attached. Accordingly, a signal output from the first light detection unit 34 and a signal output from the second light detection unit 35 can be corrected with higher accuracy, based on a signal output from the first temperature detection unit 36. Namely, it is not necessary to provide the second temperature detection unit 37 in the thermal radiation light detection device 30.

In addition, as shown in FIG. 4, the first temperature detection unit 36 may be located in a region where the FOV of the first condenser lens (first condenser lens included in at least one of the light extraction unit 33 and the first light detection unit 34) and the FOV of the second condenser lens (second condenser lens included in at least one of the light extraction unit 33 and the second light detection unit 35) overlap each other on the wall portion to which the first temperature detection unit 36 is attached. Accordingly, the signal output from the first light detection unit 34 and the signal output from the second light detection unit 35 can be corrected with higher accuracy, based on the signal output from the first temperature detection unit 36. Namely, it is not necessary to provide the second temperature detection unit 37 in the thermal radiation light detection device 30.

Hereinafter, a configuration of the thermal radiation light detection device 30 shown in FIG. 4 will be described. As shown in FIG. 4, the first light detection unit 34 and the second light detection unit 35 are attached to the wall portion 314. The second light detection unit 35 is located on a wall portion 311 side with respect to the first light detection unit 34. The light entrance unit 32 is attached to the wall portion 311. The laser light source 41 is attached to the wall portion 312. The laser light source 41 faces the light entrance unit 32 in the X-axis direction.

The light extraction unit 33 and the optical filter 43 are disposed inside the housing 31. The light extraction unit 33 is formed of a first dichroic mirror 334, a second dichroic mirror 335, the first optical system 332, and the second optical system 333. The first dichroic mirror 334 is disposed between the light entrance unit 32 and the laser light source 41 and faces the first light detection unit 34 in the Y-axis direction. The second dichroic mirror 335 is disposed between the light entrance unit 32 and the first dichroic mirror 334 and faces the second light detection unit 35 in the Y-axis direction. The first optical system 332 is disposed between the first dichroic mirror 334 and the first light detection unit 34. The second optical system 333 is disposed between the second dichroic mirror 335 and the second light detection unit 35. The optical filter 43 is disposed between the light entrance unit 32 and the second dichroic mirror 335.

The thermal radiation light R that has entered the housing 31 from the light entrance unit 32 transmits through the optical filter 43 and enters the light extraction unit 33. Scattered light and the like (scattered light and the like caused by the laser light L) that have entered the housing 31 from the light entrance unit 32 are removed by the optical filter 43. Light including the light R2 of the second wavelength of the thermal radiation light R that has entered the light extraction unit 33 is reflected to the second optical system 333 side by the second dichroic mirror 335. The light R2 of the second wavelength of the light reflected by the second dichroic mirror 335 transmits through the second optical filter 333a and is condensed by the second condenser lens 333b. The light R2 of the second wavelength condensed by the second condenser lens 333b is detected by the second light detection unit 35. Light including the light R1 of the first wavelength of the thermal radiation light R that has entered the light extraction unit 33 transmits through the second dichroic mirror 335 and is reflected to the first optical system 332 side by the first dichroic mirror 334. The light R1 of the first wavelength of the light reflected by the first dichroic mirror 334 transmits through the first optical filter 332a and is condensed by the first condenser lens 332b. The light R1 of the first wavelength condensed by the first condenser lens 332b is detected by the first light detection unit 34. The laser light V emitted from the laser light source 41 transmits through the first dichroic mirror 334, through the second dichroic mirror 335, and through the optical filter 43 and enters the light entrance unit 32.

The first temperature detection unit 36 is attached to the wall portion 313 facing the wall portion 314 to which the first light detection unit 34 and the second light detection unit 35 are attached. The first temperature detection unit 36 is located in the region where the FOV of the first condenser lens 332b (may be the first condenser lens included in at least one of the light extraction unit 33 and the first light detection unit 34) and the FOV of the second condenser lens 333b (may be the second condenser lens included in at least one of the light extraction unit 33 and the second light detection unit 35) overlap each other on the wall portion 313. In FIG. 4, the FOV of the first condenser lens 332b is shown by an alternate long and short dashed line, and the FOV of the second condenser lens 333b is shown by an alternate long and two short dashed line. The signal processing unit 38 obtains a temperature of a region (namely, the laser light irradiation region Sa) that has emitted the thermal radiation light R, based on a signal output from the first light detection unit 34 and a signal output from the second light detection unit 35. At this time, the signal processing unit 38 corrects the signal output from the first light detection unit 34 and the signal output from the second light detection unit 35, based on a signal output from the first temperature detection unit 36. Incidentally, when the first temperature detection unit 36 is located in a region where the FOV of the first condenser lens 332b (may be the first condenser lens included in at least one of the light extraction unit 33 and the first light detection unit 34) and the FOV of the second condenser lens 333b (may be the second condenser lens included in at least one of the light extraction unit 33 and the second light detection unit 35) overlap each other on a wall portion to which the first temperature detection unit 36 is attached, the wall portion to which the first temperature detection unit 36 is attached may be a wall portion facing a wall portion to which the first light detection unit 34 and the second light detection unit 35 are attached.

Various materials and shapes can be applied to each configuration in the above-described embodiment without being limited to the materials and shapes described above.

**Reference Signs List**

1: laser processing device, 10: laser processing head (light guide unit), 19: optical fiber (light guide unit), 20: laser light source, 30: thermal radiation light detection device, 31: housing, 32: light entrance unit, 33: light extraction unit, 34: first light detection unit, 34a: first light detection element, 35: second light detection unit, 35a: second light detection element, 36: first temperature detection unit, 37: second temperature detection unit, 38: signal processing unit, 311, 312, 313, 314: wall portion, 332b: first condenser lens, 333b: second condenser lens, L: laser light, R: thermal radiation light, R1: light of first wavelength, R2: light of second wavelength, S: workpiece, Sa: laser light irradiation region (region).

## Claims

1. A thermal radiation light detection device (30) comprising:

   a housing (31) including a plurality of wall portions;
   a light entrance unit (32) attached to a wall portion among the plurality of wall portions and configured to cause thermal radiation light to enter the housing (31);
   a light extraction unit (33) disposed inside the housing (31) and configured to extract light of a first wavelength and light of a second wavelength from the thermal radiation light, the second wavelength being different from the first wavelength;
   a first light detection unit (34) attached to a wall portion among the plurality of wall portions and configured to detect the light of the first wavelength;
   a second light detection unit (35) attached to a wall portion among the plurality of wall portions and configured to detect the light of the second wavelength;
   a first temperature detection unit (36) attached to a wall portion among the plurality of wall portions, the wall portion to which the first temperature detection unit (36) is attached being different from the wall portion to which the first light detection unit (34) is attached; and
   a signal processing unit (38) configured to obtain a temperature of a region having emitted the thermal radiation light, based on a signal output from the first light detection unit (34) and a signal output from the second light detection unit (35),
   wherein the signal processing unit is configured to correct at least the signal output from the first light detection unit (34), based on a signal output from the first temperature detection unit (36), and
   wherein the first light detection unit (34) includes a first light detection element (34a) configured to detect the light of the first wavelength,
   at least one of the light extraction unit (33) and the first light detection unit (34) includes a first condenser lens (332b) configured to condense the light of the first wavelength on the first light detection element (34a), and
   the first temperature detection unit (36) is located within an FOV of the first condenser lens (332b) on the wall portion to which the first temperature detection unit (36) is attached.

2. The thermal radiation light detection device (30) according to claim 1,
   wherein the first temperature detection unit (36) is attached to a wall portion among the plurality of wall portions, the wall portion to which the first temperature detection unit (36) is attached facing the wall portion to which the first light detection unit (34) is attached.

3. The thermal radiation light detection device (30) according to claim 1 or claim 2, further comprising:
   a second temperature detection unit (37) attached to a wall portion among the plurality of wall portions, the wall portion to which the second temperature detection unit (37) is attached being different from the wall portion to which the second light detection unit (35) is attached.

4. The thermal radiation light detection device (30) according to claim 3, wherein the second temperature detection unit (37) is attached to a wall portion among the plurality of wall portions, the wall portion to which the second temperature detection unit (37) is attached facing the wall portion to which the second light detection unit (35) is attached.

5. The thermal radiation light detection device (30) according to claim 3 or 4,

   wherein the second light detection unit (35) includes a second light detection element (35a) configured to detect the light of the second wavelength,
   at least one of the light extraction unit (33) and the second light detection unit (35) includes a second condenser lens (333b) configured to condense the light of the second wavelength on the second light detection element (35a), and
   the second temperature detection unit (37) is located within an FOV of the second condenser lens (333b) on the wall portion to which the second temperature detection unit (37) is attached.

6. The thermal radiation light detection device (30) according to any one of claims 3 to 5,

wherein the wall portion to which the first light detection unit (34) is attached and the wall portion to which the second light detection unit (35) is attached are different wall portions, and
the wall portion to which the first temperature detection unit (36) is attached and the wall portion to which the second temperature detection unit is attached are the same wall portion.

7. The thermal radiation light detection device (30) according to claim 1,

wherein the wall portion to which the first light detection unit (34) is attached and the wall portion to which the second light detection unit (35) is attached are the same wall portion, and
the first temperature detection unit (36) is attached to a wall portion among the plurality of wall portions, the wall portion to which the first temperature detection unit (36) is attached facing the wall portion to which the first light detection unit (34) and the second light detection unit (35) are attached.

8. The thermal radiation light detection device (30) according to claim 1,

wherein the second light detection unit (35) includes a second light detection element (35a) configured to detect the light of the second wavelength,
at least one of the light extraction unit (33) and the second light detection unit (35) includes a second condenser lens (333b) configured to condense the light of the second wavelength on the second light detection element (35a), and
the first temperature detection unit (36) is located in a region where the FOV of the first condenser lens (332b) and an FOV of the second condenser lens (333b) overlap each other on the wall portion to which the first temperature detection unit (36) is attached.

9. A laser processing device comprising:

the thermal radiation light detection device (30) according to any one of claims 1 to 8;
a laser light source (20) configured to emit laser light; and
a light guide unit (10) configured to guide thermal radiation light emitted from a region (Sa) on a workpiece (S) irradiated with the laser light, to the thermal radiation light detection device (30).


**Patentansprüche**

1. Vorrichtung zur Detektion von Wärmestrahlungslicht (30), umfassend:

ein Gehäuse (31), das eine Vielzahl von Wandabschnitten einschließt;
eine Lichteinkopplungseinheit (32), die an einem Wandabschnitt unter der Vielzahl von Wandabschnitten befestigt ist und ausgebildet ist, zu bewirken, dass Wärmestrahlungslicht in das Gehäuse (31) eintritt;
eine Lichtauskopplungseinheit (33), die innerhalb des Gehäuses (31) angeordnet ist und ausgebildet ist, Licht einer ersten Wellenlänge und Licht einer zweiten Wellenlänge aus dem Wärmestrahlungslicht auszukoppeln, wobei die zweite Wellenlänge von der ersten Wellenlänge verschieden ist;
eine erste Lichtdetektionseinheit (34), die an einem Wandabschnitt unter der Vielzahl von Wandabschnitten befestigt ist und ausgebildet ist, das Licht der ersten Wellenlänge zu detektieren;
eine zweite Lichtdetektionseinheit (35), die an einem Wandabschnitt unter der Vielzahl von Wandabschnitten befestigt ist und ausgebildet ist, das Licht der zweiten Wellenlänge zu detektieren;
eine erste Temperaturdetektionseinheit (36), die an einem Wandabschnitt unter der Vielzahl von Wandabschnitten befestigt ist, wobei der Wandabschnitt, an dem die erste Temperaturdetektionseinheit (36) befestigt ist, verschieden ist von dem Wandabschnitt, an dem die erste Lichtdetektionseinheit (34) befestigt ist; und
eine Signalverarbeitungseinheit (38), die ausgebildet ist, eine Temperatur eines Bereichs zu erhalten, der das Wärmestrahlungslicht emittiert hat, basierend auf einem Signalausgang von der ersten Lichtdetektionseinheit (34) und einem Signalausgang von der zweiten Lichtdetektionseinheit (35),
wobei die Signalverarbeitungseinheit ausgebildet ist, zumindest den Signalausgang von der ersten Lichtdetektionseinheit (34) zu korrigieren, basierend auf einem Signalausgang von der ersten Temperaturdetektionseinheit (36), und
wobei die erste Lichtdetektionseinheit (34) ein erstes Lichtdetektionselement (34a) einschließt, das ausgebildet ist, das Licht der ersten Wellenlänge zu detektieren,
wobei zumindest eine der Lichtauskopplungseinheit (33) und der ersten Lichtdetektionseinheit (34) eine erste Kondensorlinse (332b) einschließt, die ausgebildet ist, das Licht der ersten Wellenlänge auf dem ersten Lichtdetektionselement (34a) zu kondensieren, und

die erste Temperaturdetektionseinheit (36) innerhalb eines Sichtfelds (FOV) der ersten Kondensorlinse (332b) auf dem Wandabschnitt, an dem die erste Temperaturdetektionseinheit (36) befestigt ist, angeordnet ist.

2. Vorrichtung zur Detektion von Wärmestrahlungslicht (30) nach Anspruch 1,
wobei die erste Temperaturdetektionseinheit (36) an einem Wandabschnitt unter der Vielzahl von Wandabschnitten befestigt ist, wobei der Wandabschnitt, an dem die erste Temperaturdetektionseinheit (36) befestigt ist, dem Wandabschnitt, an dem die erste Lichtdetektionseinheit (34) befestigt ist, gegenüberliegt.

3. Vorrichtung zur Detektion von Wärmestrahlungslicht (30) nach Anspruch 1 oder Anspruch 2, weiter umfassend:
eine zweite Temperaturdetektionseinheit (37), die an einem Wandabschnitt unter der Vielzahl von Wandabschnitten befestigt ist, wobei der Wandabschnitt, an dem die zweite Temperaturdetektionseinheit (37) befestigt ist, verschieden ist von dem Wandabschnitt, an dem die zweite Lichtdetektionseinheit (35) befestigt ist.

4. Vorrichtung zur Detektion von Wärmestrahlungslicht (30) nach Anspruch 3,
wobei die zweite Temperaturdetektionseinheit (37) an einem Wandabschnitt unter der Vielzahl von Wandabschnitten befestigt ist, wobei der Wandabschnitt, an dem die zweite Temperaturdetektionseinheit (37) befestigt ist, dem Wandabschnitt, an dem die zweite Lichtdetektionseinheit (35) befestigt ist, gegenüberliegt.

5. Vorrichtung zur Detektion von Wärmestrahlungslicht (30) nach Anspruch 3 oder 4,

wobei die zweite Lichtdetektionseinheit (35) ein zweites Lichtdetektionselement (35a) einschließt, das ausgebildet ist, das Licht der zweiten Wellenlänge zu detektieren,

wobei zumindest eine der Lichtauskopplungseinheit (33) und der zweiten Lichtdetektionseinheit (35) eine zweite Kondensorlinse (333b) einschließt, die ausgebildet ist, das Licht der zweiten Wellenlänge auf dem zweiten Lichtdetektionselement (35a) zu kondensieren, und

die zweite Temperaturdetektionseinheit (37) innerhalb eines Sichtfelds (FOV) der zweiten Kondensorlinse (333b) auf dem Wandabschnitt, an dem die zweite Temperaturdetektionseinheit (37) befestigt ist, angeordnet ist.

6. Vorrichtung zur Detektion von Wärmestrahlungslicht (30) nach einem der Ansprüche 3 bis 5,

wobei der Wandabschnitt, an dem die erste Lichtdetektionseinheit (34) befestigt ist, und der Wandabschnitt, an dem die zweite Lichtdetektionseinheit (35) befestigt ist, verschiedene Wandabschnitte sind, und

der Wandabschnitt, an dem die erste Temperaturdetektionseinheit (36) befestigt ist, und der Wandabschnitt, an dem die zweite Temperaturdetektionseinheit befestigt ist, derselbe Wandabschnitt sind.

7. Vorrichtung zur Detektion von Wärmestrahlungslicht (30) nach Anspruch 1,

wobei der Wandabschnitt, an dem die erste Lichtdetektionseinheit (34) befestigt ist, und der Wandabschnitt, an dem die zweite Lichtdetektionseinheit (35) befestigt ist, derselbe Wandabschnitt sind, und

die erste Temperaturdetektionseinheit (36) an einem Wandabschnitt unter der Vielzahl von Wandabschnitten befestigt ist, wobei der Wandabschnitt, an dem die erste Temperaturdetektionseinheit (36) befestigt ist, dem Wandabschnitt, an dem die erste Lichtdetektionseinheit (34) und die zweite Lichtdetektionseinheit (35) befestigt sind, gegenüberliegt.

8. Vorrichtung zur Detektion von Wärmestrahlungslicht (30) nach Anspruch 1,

wobei die zweite Lichtdetektionseinheit (35) ein zweites Lichtdetektionselement (35a) einschließt, das ausgebildet ist, das Licht der zweiten Wellenlänge zu detektieren,

wobei zumindest eine der Lichtauskopplungseinheit (33) und der zweiten Lichtdetektionseinheit (35) eine zweite Kondensorlinse (333b) einschließt, die ausgebildet ist, das Licht der zweiten Wellenlänge auf dem zweiten Lichtdetektionselement (35a) zu kondensieren, und

die erste Temperaturdetektionseinheit (36) in einem Bereich angeordnet ist, in dem sich das Sichtfeld (FOV) der ersten Kondensorlinse (332b) und ein Sichtfeld (FOV) der zweiten Kondensorlinse (333b) auf dem Wandabschnitt, an dem die erste Temperaturdetektionseinheit (36) befestigt ist, gegenseitig überlappen.

9. Laserbearbeitungsvorrichtung, umfassend:

die Vorrichtung zur Detektion von Wärmestrahlungslicht (30) nach einem der Ansprüche 1 bis 8;

eine Laserlichtquelle (20), die ausgebildet ist, Laserlicht zu emittieren; und

eine Lichtleiteinheit (10), die ausgebildet ist, Wärmestrahlungslicht, das von einem Bereich (Sa) auf einem mit dem Laserlicht bestrahlten Werkstück (S) emittiert wird, zu der Vorrichtung zur Detektion von Wärmestrahlungslicht (30) zu leiten.

**Revendications**

1. Dispositif de détection de lumière de rayonnement thermique (30) comprenant :

   un boîtier (31) incluant une pluralité de parties de paroi ;

   une unité d'entrée de lumière (32) attachée à une partie de paroi parmi la pluralité de parties de paroi et conçue pour faire entrer la lumière de rayonnement thermique dans le boîtier (31) ;

   une unité d'extraction de lumière (33) disposée à l'intérieur du boîtier (31) et conçue pour extraire de la lumière d'une première longueur d'onde et de la lumière d'une seconde longueur d'onde de la lumière de rayonnement thermique, la seconde longueur d'onde étant différente de la première longueur d'onde ;

   une première unité de détection de lumière (34) attachée à une partie de paroi parmi la pluralité de parties de paroi et conçue pour détecter la lumière de la première longueur d'onde ;

   une seconde unité de détection de lumière (35) attachée à une partie de paroi parmi la pluralité de parties de paroi et conçue pour détecter la lumière de la seconde longueur d'onde ;

   une première unité de détection de température (36) attachée à une partie de paroi parmi la pluralité de parties de paroi, la partie de paroi à laquelle la première unité de détection de température (36) est attachée étant différente de la partie de paroi à laquelle la première unité de détection de lumière (34) est attachée ; et

   une unité de traitement de signaux (38) conçue pour obtenir une température d'une région ayant émis la lumière de rayonnement thermique, sur la base d'un signal de sortie provenant de la première unité de détection de lumière (34) et d'un signal de sortie provenant de la seconde unité de détection de lumière (35),

   dans lequel l'unité de traitement de signaux est conçue pour corriger au moins le signal de sortie provenant de la première unité de détection de lumière (34), sur la base d'un signal de sortie provenant de la première unité de détection de température (36), et

   dans lequel la première unité de détection de lumière (34) inclut un premier élément de détection de lumière (34a) conçu pour détecter la lumière de la première longueur d'onde,

   au moins l'une de l'unité d'extraction de lumière (33) et de la première unité de détection de lumière (34) inclut une première lentille de condenseur (332b) conçue pour condenser la lumière de la première longueur d'onde sur le premier élément de détection de lumière (34a), et

   la première unité de détection de température (36) est située dans un champ de vision (FOV) de la première lentille de condenseur (332b) sur la partie de paroi à laquelle la première unité de détection de température (36) est attachée.

2. Dispositif de détection de lumière de rayonnement thermique (30) selon la revendication 1,
   dans lequel la première unité de détection de température (36) est attachée à une partie de paroi parmi la pluralité de parties de paroi, la partie de paroi à laquelle la première unité de détection de température (36) est attachée faisant face à la partie de paroi à laquelle la première unité de détection de lumière (34) est attachée.

3. Dispositif de détection de lumière de rayonnement thermique (30) selon la revendication 1 ou la revendication 2, comprenant en outre :
   une seconde unité de détection de température (37) attachée à une partie de paroi parmi la pluralité de parties de paroi, la partie de paroi à laquelle la seconde unité de détection de température (37) est attachée étant différente de la partie de paroi à laquelle la seconde unité de détection de lumière (35) est attachée.

4. Dispositif de détection de lumière de rayonnement thermique (30) selon la revendication 3,
   dans lequel la seconde unité de détection de température (37) est attachée à une partie de paroi parmi la pluralité de parties de paroi, la partie de paroi à laquelle la seconde unité de détection de température (37) est attachée faisant face à la partie de paroi à laquelle la seconde unité de détection de lumière (35) est attachée.

5. Dispositif de détection de lumière de rayonnement thermique (30) selon la revendication 3 ou la revendication 4,

   dans lequel la seconde unité de détection de lumière (35) inclut un second élément de détection de lumière (35a) conçu pour détecter la lumière de la seconde longueur d'onde,

au moins l'une de l'unité d'extraction de lumière (33) et de la seconde unité de détection de lumière (35) inclut une seconde lentille de condenseur (333b) conçue pour condenser la lumière de la seconde longueur d'onde sur le second élément de détection de lumière (35a), et

la seconde unité de détection de température (37) est située à l'intérieur d'un champ de vision (FOV) de la seconde lentille de condenseur (333b) sur la partie de paroi à laquelle la seconde unité de détection de température (37) est attachée.

6. Dispositif de détection de lumière de rayonnement thermique (30) selon l'une quelconque des revendications 3 à 5,

dans lequel la partie de paroi à laquelle la première unité de détection de lumière (34) est attachée et la partie de paroi à laquelle la seconde unité de détection de lumière (35) est attachée sont des parties de paroi différentes, et

la partie de paroi à laquelle la première unité de détection de température (36) est attachée et la partie de paroi à laquelle la seconde unité de détection de température est attachée sont la même partie de paroi.

7. Dispositif de détection de lumière de rayonnement thermique (30) selon la revendication 1,

dans lequel la partie de paroi à laquelle la première unité de détection de lumière (34) est attachée et la partie de paroi à laquelle la seconde unité de détection de lumière (35) est attachée sont la même partie de paroi, et

la première unité de détection de température (36) est attachée à une partie de paroi parmi la pluralité de parties de paroi, la partie de paroi à laquelle la première unité de détection de température (36) est attachée faisant face à la partie de paroi à laquelle la première unité de détection de lumière (34) et la seconde unité de détection de lumière (35) sont attachées.

8. Dispositif de détection de lumière de rayonnement thermique (30) selon la revendication 1,

dans lequel la seconde unité de détection de lumière (35) inclut un second élément de détection de lumière (35a) conçu pour détecter la lumière de la seconde longueur d'onde,

au moins l'une de l'unité d'extraction de lumière (33) et de la seconde unité de détection de lumière (35) inclut une seconde lentille de condenseur (333b) conçue pour condenser la lumière de la seconde longueur d'onde sur le second élément de détection de lumière (35a), et

la première unité de détection de température (36) est située dans une région où le champ de vision (FOV) de la première lentille de condenseur (332b) et un champ de vision (FOV) de la seconde lentille de condenseur (333b) se chevauchent l'un l'autre sur la partie de paroi à laquelle la première unité de détection de température (36) est attachée.

9. Dispositif de traitement au laser comprenant :

le dispositif de détection de lumière de rayonnement thermique (30) selon l'une quelconque des revendications 1 à 8 ;

une source de lumière laser (20) conçue pour émettre une lumière laser ; et

une unité de guidage de lumière (10) conçue pour guider une lumière de rayonnement thermique émise depuis une région (Sa) sur une pièce à usiner (S) irradiée avec la lumière laser, vers le dispositif de détection de lumière de rayonnement thermique (30).

# Fig.1

*Fig.2*

*Fig.3*

# Fig.4

**EP 4 123 273 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006341563 A
- US 5696703 A
- EP 2706330 A1
- JP 2003245789 A
- US 4619533 A